# EUROPÄISCHE PATENTSCHRIFT

(11) **EP 3 201 139 B1**
(45) Veröffentlichungstag und Bekanntmachung des Hinweises auf die Patenterteilung: **12.04.2023**
(21) Anmeldenummer: 15787432.2
(22) Anmeldetag: 30.09.2015
(51) Int. Cl.: C02F 1/44, C02F 1/78, C02F 9/00, B01D 65/02

(54) **VORRICHTUNG UND VERFAHREN ZUR FILTRATION VON WASSER**
DEVICE AND METHOD FOR FILTERING WATER
DISPOSITIF ET PROCEDE DE FILTRATION DE L'EAU

(30) Priorität: 01.10.2014 AT 506982014
(43) Veröffentlichungstag der Anmeldung: 09.08.2017
(73) Patentinhaber: Deltacore GmbH, 4600 Wels (AT)
(72) Erfinder: EL KHIAR, Hakim, 6000 Koper (SI); BRANDT, Vili, 1000 Ljubljana (SI); GLAVINA, Martin, 6000 Koper (SI)
(74) Vertreter: Hübscher & Partner Patentanwälte GmbH
(86) Internationale Anmeldenummer: PCT/AT2015/050245
(87) Internationale Veröffentlichungsnummer: WO 2016/049675

(56) Entgegenhaltungen:
- EP-A1- 1 088 792
- WO-A1-00/27510
- WO-A2-2012/051517
- JP-A- 2003 285 059
- US-A1- 2013 313 191
- SARTOR M ET AL: "Demonstration of a new hybrid process for the decentralised drinking and service water production from surface water in Thailand", DESALINATION , Nr. 222 31. Dezember 2008 (2008-12-31), Seiten 528-540, XP002500398, ISSN: 0011-9164, DOI: 10.1016/J.DESAL.0000.00.000 Gefunden im Internet: URL:http://www.desline.com/71c-tc.shtml [gefunden am 2007-04-25]

## Beschreibung

### Technisches Gebiet

Die Erfindung bezieht sich auf eine Vorrichtung und ein Verfahren zur Filtration von Wasser mit einer Filteranordnung mit chemikalienfreier Selbstreinigungsfunktion zur Filterreinigung und mit einer Ozonisierungseinrichtung, mit einer Zuleitung für kontaminiertes Wasser an die eine Pumpe angeschlossen ist, wobei an die Zuleitung die Ozonzuleitung einer Ozonquelle, nämlich eines Ozonerzeugers, zwecks Zuführung von Ozon zum kontaminierten Wasser angeschlossen ist, wobei die Pumpe ozonisiertes Wasser einem Membranfiltermodul, nämlich einem Querstrom- Ultrafiltrationsmodul, zuleitet.

### Stand der Technik

Eine eingangs erwähnte Vorrichtung ist aus der US 2013/313191 A1 bekannt. Weitere Gattungsgemäße Vorrichtungen offenbaren die EP 1 088 792 A1 und JP2003285059A).

Ultrafiltration ist ein auf Niederdruck basierender Prozess, womit Pathogene und feste Aufschlämmungen aus dem Wasser entfernt werden. Bei Trinkwasseraufbereitung durch Ultrafiltration wird eine hohe Qualität des Ausgangswassers erzielt. Es gibt viele Sorten von Ultrafiltrationsmembranen, die aus verschiedenen Materialien hergestellt sind. Ein gemeinsames Problem aller dieser Membranen liegt darin, dass sie als ein Molekularsieb wirken und somit sehr schnell verstopft werden. Zur effektiven Wirksamkeit benötigen sie ein System zur chemischen Membranreinigung.

Die folgenden Ultrafiltrationsmembranen sind bekannt: Celluloseacetatmembranen (CA), Polysulphonmembranen (PS), Polyvinylidenfluoridmembranen (PVFD), Polyesthersulphonmembranen (PES), Polypropilenmembranen (PP), Polyvinylchloridmembranen (PVC), Polyakrilnitrilmembranen (PAN) und Polyamidmembranen (PA). Alle diesen Membranen weisen Poren auf, durch die Wasser hygroskopisch durgelassen wird. Die Durchlässigkeit wird in der MWCO-Einheit (molecular weight cut-off) oder Durchlässigkeitsgrenze der Molekularmasse gemessen. Alle diesen Membranen haben ein gemeinsames Problem und zwar die Verstopfung von Membranen, die demzufolge zu einem reduzierten Durchfluss führt. Die Membranen werden durch die im Wasser anwesenden anorganischen und organischen Partikeln, die auf der Oberfläche und in den Membranporen zurückgehalten werden, verstopft und somit wird die Durchlässigkeit der Membranen reduziert. Verstopfung reduziert den Durchfluss durch die Membran bis zur vollständigen Undurchlässigkeit. Um den reduzierten Durchfluss zu verringern, muss die Membran chemisch gereinigt werden. Chemische Reinigung von Polymermembranen durch Ultrafiltration ist der geeignete Prozess für minimale Verluste des Durchflusses durch irreversible Verstopfung des Durchflusses. Die Auswahl der Reinigungsmethode von Polymermembranen hängt vom Membranmaterial, ihrer chemischen und physikalischen Beständigkeit sowie ihrer Verstopfungstendenz ab. Die Treibkraft des Prozesses ist der Druckunterschied, der die Dichte des Volumenstroms des Permeats durch die Membran verursacht. In Ultrafiltrationsprozessen werden die Stoffe durch das Siebphänomen aufgrund der Partikelgröße getrennt. Die Ultrafiltration ist ein Stofftrennverfahren unter Verwendung von Membranen, die eine Porengröße von 0,1 bis 0,01 Mikron aufweisen und die Stoffe mit hohem Molekulargewicht zwischen 1.000 und 20.000 g/mol, Kolloidmaterialien sowie organische und anorganische Polymermoleküle entfernen. Aufschlämmende Feststoffe, Strukturmoleküle sowie Solvate mit hohem Molekulargewicht werden auf der Membran zurückgehalten, wohingegen Wasser und Solvate mit niedrigem Molekulargewicht durch die Membran hindurchfließen. Da nur die Moleküle mit einem hohem Molekulargewicht entfernt werden, ist der Unterschied im osmotischen Druck auf der Oberfläche der Ultrafiltrationsmembran vernachlässigbar, deshalb genügt schon die Verwendung von niedrigen Drucken, um einen hohen Durchflussgrad durch die Membran zu erzielen.

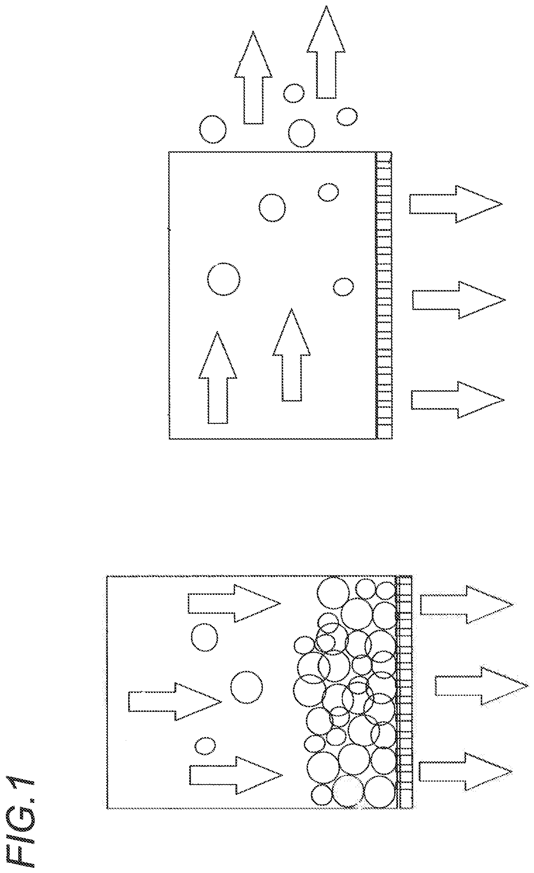

Die Treibkraft in druckbedingten Membranverfahren ist der Druck, mit dem eine Lösung durch die Membran dringt. Zu den druckbedingten Membranverfahren gehören gemäß der Stromrichtung auf Figur 1: links 1 die Dead-End-Filtration und auf Figur 1 rechts 1 die Querstrom-Filtration. Bei der Dead-End-Filtration fließt die Feed-Lösung senkrecht auf die Membranoberfläche. Alle Feststoffe 2, die die Größe der Membranporen überschreiten, werden auf der Oberfläche der Membran 3 zurückgehalten und bilden einen Feststoffkuchen. Die durch die Membran dringende Flüssigkeit wird Permeat 4 genannt. Die Masse des Filterkuchens steigt, bis das maximale Filtervermögen erreicht ist. Die Membran muss gereinigt oder ausgetauscht werden. Bei der Querstrom-Filtration fließt die Feed-Lösung tangential auf die Membranoberfläche. Ein Vorteil der Querstrom--Filtration gegenüber der herkömmlichen (Dead-End) Filtration liegt in einer Verringerung der Konzentration an Polarisation und der unerwünschten Verstopfung wegen Zurückhalten der Hauptmasse der Lösung auf der Grenzoberfläche zur Membran. Mit Kontaminanten belastetes Wasser wird aus dem Filter 5 ausgesondert.

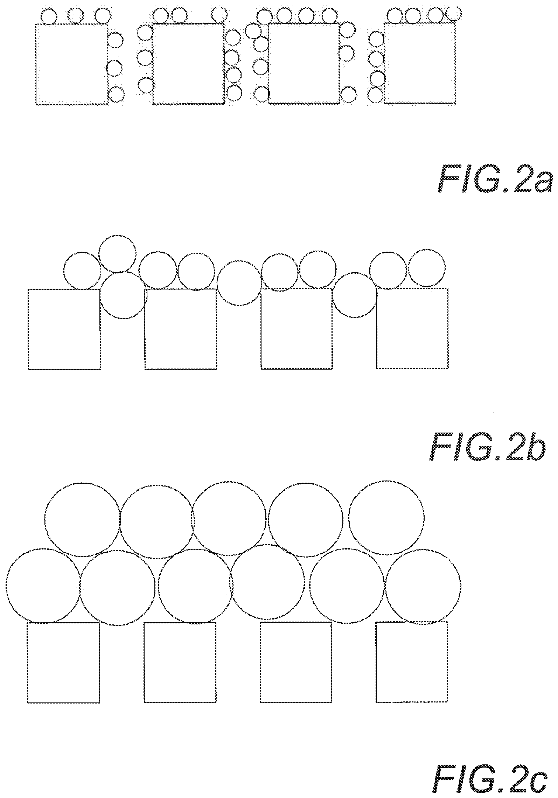

Die Teilung von Membranverstopfungen in irreversible und reversible Verstopfungen basiert auf der Interaktionsstärke zwischen den Partikeln auf der Materialoberfläche. Die reversible Membranverstopfung kann mithilfe von einer starken Scherkraft bei Rückstromspülung entfernt werden. Bildung einer festen Grundmasse der verstopften Solvatschicht während des ununterbrochenen Filtrationsverfahrens wandelt die reversible Membranverstopfung in eine irreversible Verstopfung um. Eine irreversibel verstopfte Membran lässt sich mit chemischen Reagenten reinigen. Die Membranen lassen sich dynamisch reinigen, wo die Membran in einem Ultrafiltrationsgehäuse unter Druck eingefügt ist. Die andere Art ist statisch: die Membran wird aus dem Gehäuse herausgenommen und in eine Lösung mit Reinigungsmittel eingetaucht. Normalerweise werden für die Membranreinigung Natriumchlorat (NaOCl), Natriumhydroxyd (NaOH) und Zitronsäure verwendet. Membranverstopfung ist der Hauptgrund, weshalb die Ultrafiltrationssysteme relativ langsam als technologische Lösungen eingeführt werden. Das Reinigungsverfahren mit chemischen Reinigungsmitteln hielt uns von Anwendung dieser sonst sehr wirksamen Lösungen ab. Mehrere Arten von Membranverstopfung, wie in Figur 2 dargestellt, sind bekannt: Adsorption Verstopfung, Kolloidverstopfung, Biologische Verstopfung, Anorganische Verstopfung.

Es gibt einige bekannte Lösungen von transportablen Vorrichtungen zur Ultrafiltration mithilfe von Ozon. Die älteste bekannte Lösung zur Ultrafiltration von kontaminiertem Wasser zu reinem Trinkwasser mithilfe von Ozon ist aus der US 20050139530 A1 bekannt. In diesem Dokument wird die Ultrafiltration aus einer Wasserquelle mithilfe von einer Tauchpumpe über einen Zufuhrkanal geleitet. In der Wasserquelle befinden sich Filteranordnungen mit verschiedenen Filtrationsfunktionen und die Filteranordnungen werden ausgetauscht, wenn der Wasserdurchfluss durch die Filter reduziert wird bzw. die Filter verstopft werden. Die Vorrichtung verfügt über viele Rückschleifen, was nicht nur eine bessere Reinigung, aber auch Selbstreinigung der Filteranordnungen ermöglicht, sowie über eine Vorratskammer, in der gereinigtes Wasser gespeichert wird. Die Vorrichtung endet mit einem Chloridanalysator und vorher werden Ozon und Sauerstoff ins Wasser eingeblasen. Es handelt sich um ein mobiles System auf einem Anhänger, das für größere Siedlungen bzw. dichtbevölkerte Gebiete geeignet ist.

Eine andere Lösung zur Mikro- und Ultrafiltration von kontaminiertem Wasser zu reinem Trinkwasser ist aus der US 8,419,947 A bekannt. Die Lösung umfasst auch das Umkehrosmose-Verfahren und sieht eine chemische Vorreinigung von Wasser vor, danach wird das Wasser wie bei der vorliegenden Vorrichtung mit Ozon gereinigt. Die Lösung umfasst also keine Selbstreinigungsfunktion der Ultrafiltrationsmembranen und in einer sinnvollen Form wird Ozon nach Vorfiltration zugefügt, was nicht mit der vorliegenden Lösung identisch ist, in der erfindungsgemäßen Lösung wird auch Vorfiltration verwendet, jedoch keine chemische Vorfiltration, und die Rückreinigung ermöglicht eine Selbstreinigung von Ultrafiltrationsmembranen. Aus der US 5,244,585 A ist eine Lösung zur Filtration von kontaminiertem Wasser bekannt, wobei die Reinigung durch Keramikfilter mit einer Rückpumpe derart durchführt, dass Hochdruckeinblasen von Luft verwendet wird. Die Reinigung wird in Schwimmbädern eingesetzt und kann sowohl mechanisch als auch bakteriologisch und antiviral sein. Das bedeutet, dass solches Wasser, mit einigen Modifizierungen, tatsächlich trinkbar ist.

Die CA 2389284 A1 offenbart eine Lösung zur Filtration von kontaminierten Abfallströmen, wobei kontaminiertes Wasser direkt in die Ultrafiltrationsmembran fließt, dessen Partikeln dann wegen des Niederdruckflusses auf dem Mikrofilter aufgefangen werden. Der Niederdruckstrom ermöglicht den Partikeln eine unregelmäßige Matrix zu bilden, in der die Partikeln aufgefangen werden. Das derart gewonnene Permeat ermöglicht, dass ein Teil des gereinigten Wassers in die Ultrafiltrationsmembranen zurückfließt, wo es wiederholt gereinigt werden kann wobei Permeat und Konzentrat gebildet werden. Die Rückreinigung durch die Kombination und Ozon ermöglicht also eine Selbstreinigungsfunktion der Ultrafiltrationsmembran, die durch gefiltertes Wasser gereinigt wird. Die Vorrichtung liegt zwar auch in transportabler Form vor, jedoch filtriert sie nicht kontaminiertes Wasser zu reinem Trinkwasser durch Verwendung von Ozon vor der Ultrafiltrationsanordnung, sondern filtriert sie zuerst kontaminiertes Wasser durch die Ultrafiltrationsmembran und ermöglicht dann mithilfe von Ozon die Selbstreinigungsfunktion der Ultrafiltrationsmembran.

### Darstellung der Erfindung

Aufgabe der Erfindung ist es eine Vorrichtung und ein Verfahren anzugeben, bei dem die Filtermodulstandzeit mit einfachen Mitteln erheblich verbessert werden kann.

Die Erfindung löst diese Aufgabe dadurch, dass ein Teil des Wassers durch die Membran gefiltert wird und ein anderer Teil des Wassers hingegen über ein Druckregelgerät, insbesondere ein Ventil, ungefiltert wieder aus dem Membranfiltermodul geleitet wird und gereinigtes, durch die Membran gefiltertes Wasser einerseits in einem Auslass und anderseits in einem Behälter für reines Trinkwasser mündet, wobei der Behälter über Leitungen und eine Rückreinigungspumpe zum Gegenspülen der Filtermembranen im Membranfiltermodul an das Membranfiltermodul angeschlossen ist und wobei das Ausspülen von im Membranfiltermodul zurückgehaltenen Verunreinigungen über ein einem Abwasseraustritt zugeordnetes Druckregelgerät, insbesondere ein Ventil, erfolgt, wobei die Rückreinigungspumpe zum Gegenspülen der Filtermembranen im Membranfiltermodul über ein weiteres Membranfiltermodul, einen Ultrafilter, an das Membranfiltermodul zur Rückreinigung des Membranfiltermoduls angeschlossen ist.

Erfindungsgemäß ist damit ein häufiger Austausch der Filteranordnungen nicht nötig, da die Vorrichtung über eine Selbstreinigungsfunktion verfügt, die auf einem Voreinblasen von Ozon und auf Rückreinigung durch Ausspülen der Verunreinigungen basiert.

Der Gegenstand der Erfindung ist eine Vorrichtung zur Ultrafiltration von Wasser mit automatischer dynamischer Membranreinigung ohne Anwendung von Chemikalien mit Ozonisierung, sowie das Verfahren und die mechanische Vorrichtung, in die kontaminiertes Wasser eingefüllt wird, das dann mithilfe von Ozoneinblasung und Ultrafiltration zu reinem Trinkwasser gefiltert wird; ein Teil des kontaminierten Wassers verbleibt in der Vorrichtung und das Filtersystem wird dann durch Rückreinigung derart selbstgereinigt, dass das Abwasser tangential auf die Membran frei wegfließt und die Membran oberflächlich selbstgereinigt wird und somit lassen sich die Membranen ohne Chemikalien reinigen.

Das durch die Erfindung gelöste technische Problem ist eine solche Konstruktion der Ultrafiltrationsvorrichtung, die mithilfe von Ozoneinsatz vor Ultrafiltrationsanordnungen und mithilfe von Rückreinigung die Selbstreinigungsfunktion mit bekannter Wasserultrafiltration ermöglichen wird und demzufolge die Mehrfachanwendung von Ultrafiltrationmembranen ohne Anwendung von Chemikalien gewährleisten wird. Während des Betriebes reinigt sich also das Ultrafiltrationsmodul tangential selbst.

Die Zuleitung ist vorzugsweise einem Festpartikel zurückhaltenden Vorfilter nachgeordnet und der der Ozonerzeuger umfasst vorzugsweise eine Lufteintrittsöffnung mit zugeordnetem Luftfilter und leitet über die Ozonzuleitung im Ozonerzeuger generiertes Ozon in die Zuleitung. Die Rückreinigungspumpe zum Gegenspülen der Filtermembranen im Membranfiltermodul kann über ein weiteres Membranfiltermodul, einen Ultrafilter, erfolgen.

Das erfindungsgemäße Verfahren zur Filtration von Wasser mit einer Filteranordnung mit chemikalienfreier Selbstreinigungsfunktion zur Filterreinigung und zur Ozonisierung des Wassers zeichnet sich dadurch aus, dass, dem kontaminierten, ggf. vorgereinigten, Wasser zunächst Ozon zugesetzt wird, wonach das Wasser-Ozongemisch durch ein Membranfiltermodul, insbesondere einem Querstrom-Ultrafiltrationsmodul, gefördert wird, wobei ein Teil des Wassers durch die Membran gefiltert wird und ein anderer Teil des Wassers hingegen über ein Druckregelgerät, insbesondere ein Ventil, ungefiltert wieder aus dem Membranfiltermodul geleitet wird und wobei das durch die Membran gefilterte Wasser in zwei Teile aufgeteilt wird, ein Teil des Wassers ist zur Verwendung bereit und der andere Teil in einem Behälter zur Rückreinigung des Membranfiltermoduls gespeichert, wobei das gereinigte Wasser zur Rückreinigung des Membranfiltermoduls durch das Membranfiltermodul zurückgefördert wird, das zurückgeförderte Wasser parallel zur Filteroberfläche aus dem Membranfiltermodul unter Abreinigung der Filteroberfläche über ein Druckregelgerät ausfließt. Das zurückgeförderte Wasser kann zusammen mit kontaminierten, ggf. vorgereinigten, Wasser, parallel zur Filteroberfläche aus dem Membranfiltermodul unter Abreinigung der Filteroberfläche über ein Druckregelgerät ausfließen

### Kurze Beschreibung der Zeichnungen

Die Erfindung wird anhand eines Ausführungsbeispiels und durch Zeichnungen dargestellt. Sie zeigen:
Fig. 1 links ein Schema einer - Dead-End-Filtration und rechts einer Querstrom-Filtration,
Fig. 2 Schemata verschiedener Porenverstopfungsformen,
Fig. 3 Schema einer Querstrom - Filtration,
Fig. 4 Schema eines Oxidationsprozesses und
Fig. 5 ein Anlagenschema einer erfindungsgemäßen Vorrichtung.

### Weg zur Ausführung der Erfindung

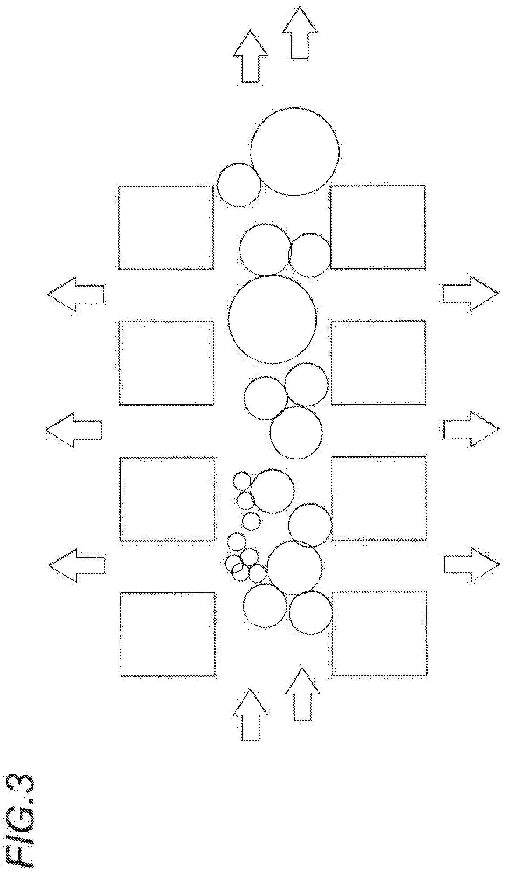

Bei der in Fig. 3 dargestellten Querstrom-Filtration fließt Eingangswasser tangential auf die Membranoberfläche. Mit Zulieferung von Ozon ins Wasser vor dem Membraneintritt wird eine ganze Reihe von Reaktionen erzielt, die eine bessere Wirkung des Ultrafilters ermöglichen und die Entwicklung von Mikroorganismen verhindern, also kommt es nicht zu biologischen Verstopfungen. Die anorganischen Kontaminanten werden durch Ozon oxidiert und dadurch werden die Ansammlungen von Kontaminanten, die schwerer durch die Membranporen durchdringen, erhöht. Wegen des tangentialen Stroms und des geöffneten Austritts auf der Membran werden die Kontaminanten durch den Abfluss ausgespült.

Ozon ist eines der stärkesten Oxidationsmittel in der Natur. Es zerfällt nach der Gleichung O3 --> O2 + O, und der dabei entstehende atomare Sauerstoff verfügt über eine außergewöhnliche Oxidationsfähigkeit. Die Verwendung ist äußerst sicher, weil auch im Überdosierungsfall keine für den Menschen gefährlichen Verbindungen gebildet werden. Das Ozon, das eine allotrope Modifikation von Sauerstoff ist, ist extrem instabil und reaktiv und zerfällt schnell, deshalb muss es vor der Anwendung unmittelbar an Ort und Stelle erzeugt werden. Es wird derart hergestellt, dass Sauerstoff durch Elektroden geleitet wird, wobei ein elektrisches Feld mit Hochspannung und Mittelhochfrequenz erzeugt wird. Ozon wird meistens zur Reinigung von Trinkwasser verwendet. Es wird zur Oxidation von Metallen und organischen Stoffen sowie zur Entkeimung verwendet. Im Vergleich zu anderen Desinfektionsmitteln (Cl,...) verläuft die Desinfektion mit Ozon wesentlich schneller und unabhängig vom Ammoniakgehalt und pH-Wert des Wassers. Unter anderem werden mit Ozon unangenehme Gerüche aus dem Wasser entfernt (durch Entfernung organischer Kontaminierung) und die Konzentration an aufgelösten Schwermetallen wie Fe und Mg reduziert. Im Gegensatz zu anderen Desinfektionsmitteln verbleiben im Wasser keine für den Menschen gefährlichen Stoffe, obwohl Ozon überdosiert wird.

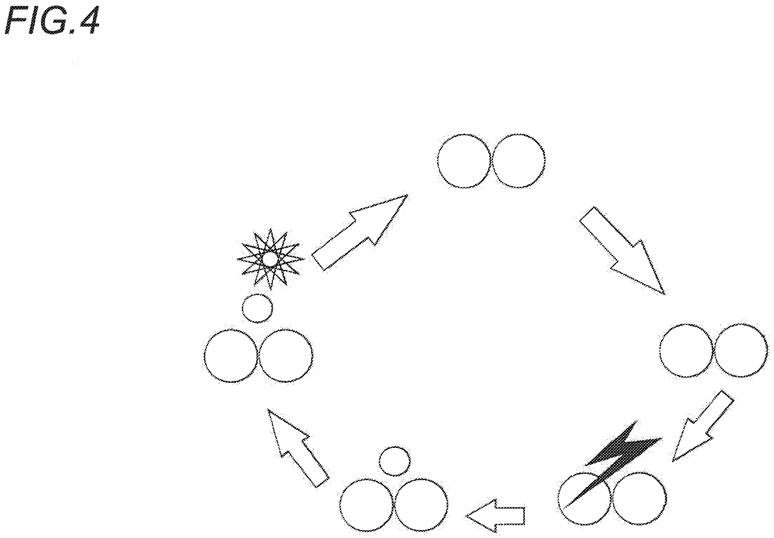

In Figur 4 wird das Sauerstoffmolekül O2 durch die Elektroden im Ozongenerator geführt, wobei ein elektrisches Feld mit Hochspannung und Mittelhochfrequenz erzeugt wird. Das Ozon O3 wird erzeugt. O3 oxidiert Metalle und organische Stoffe und zerstört Mikroorganismen. Bei der Reaktion wird O3 wieder zu Sauerstoff O2 umgewandelt ohne Erzeugung von Koprodukten.

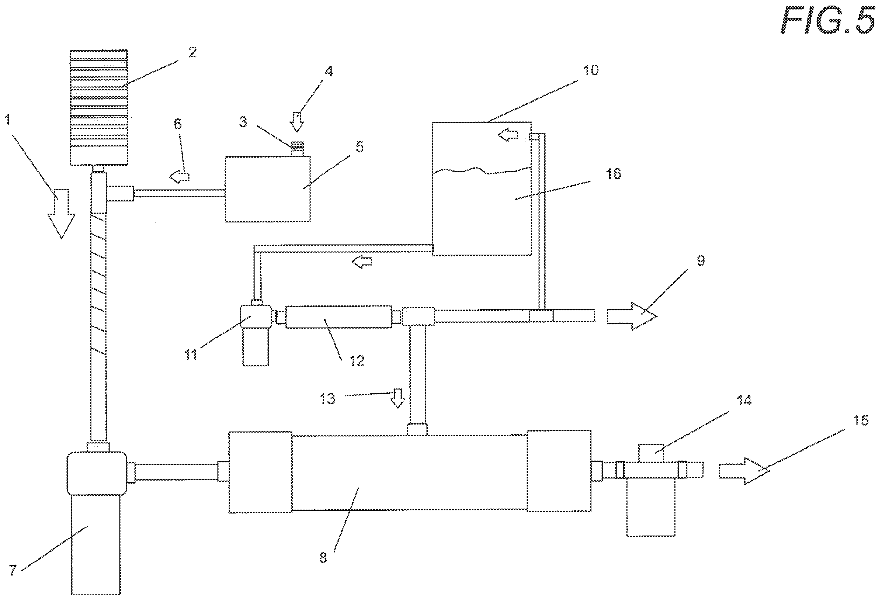

In Fig. 5 wird die Ultrafiltration von kontaminiertem Wasser zu reinem Trinkwasser durch Eintritt von kontaminiertem Wasser durch die Zuleitung 1 nach der Reinigung von Festpartikeln nach Vorfiltration im Vorfilter 2 dargestellt. An der Eintrittsöffnung 4 für Luft wird Luft durch den Luftfilter 3 zugeführt. Das im Ozonerzeuger 5 generierte Ozon 5 wird über die Ozonzuleitung 6 dem vorher grobgereinigten Wasser zuführt. Mit der Pumpe 7 wird ozonisiertes Wasser zum Ultrafiltrationsmodul 8 zugeführt, das gereinigtes Trinkwasser bis zum Auslass 9 transportiert; das verbleibende gereinigte Wasser 16 fließt in den Behälter 10 mit reinem Trinkwasser, das dem Gegenspülen der Ultrafiltrationsmembranen durch die Rückreinigungspumpe 11 und des Ultrafilters 12 zur Rückreinigung in Richtung der Rückreinigung 13 bis zum Druckregelgerät 14 dient. Abwasser, das die Ultrafiltrationsmembranen reinigt, fließt getrennt durch den Abwasseraustritt 15.

Das Verfahren zur Ultrafiltration von Wasser mit automatischer dynamischer Membranreinigung ohne Anwendung von Chemikalien mit Ozonisierung verläuft wie folgt. Kontaminiertes Wasser wird mit der Pumpe eingepumpt und in der ersten Phase wird Ozon zugefügt. Wasser und das Ozongemisch fließen dann tangential durch das Ultrafiltrationsmodul. Ein Teil des Wassers sickert durch die Membran ein, ein Teil des Wassers hingegen fließt aus der Membran durch das Druckregelgerät. Das durch die Membran eingesickerte Wasser teilt sich in zwei Teile auf. Ein Teil des Wassers ist zur Verwendung bereit, der andere Teil wird aber im Behälter gespeichert und zur Rückreinigung der Membran eingesetzt. Das Wasser, das tangential aus der Membran ausfließt, reinigt gleichzeitig die Membran und verhindert die Entwicklung von Mikroorganismen und eines Biofilms auf der Membran. Wegen dieses Prozesses werden bei der Membranreinigung keine chemischen Mittel benötigt.

Ultrafiltration von Wasser mit dem Austausch von Trink- und Abwasser und mit der Selbstreinigungsfunktion von Filteranordnungen ohne Anwendung von Chemikalien mit Ozonisierung erfolgt durch eine mechanische Vorrichtung, die mit der Pumpe kontaminiertes Wasser einpumpt und in der ersten Phase Ozon hinzufügt. Wasser und das Ozongemisch fließen dann tangential durch das Ultrafiltrationsmodul. Ein Teil des Wassers sickert durch die Membran ein, ein Teil des Wassers hingegen fließt aus der Membran durch das Druckregelgerät. Das durch die Membran eingesickerte Wasser teilt sich in zwei Teile auf. Ein Teil des Wassers ist zur Verwendung bereit, der andere Teil wird aber im Behälter gespeichert und zur Rückreinigung der Membran eingesetzt. Das Wasser, das tangential aus der Membran ausfließt, reinigt gleichzeitig die Membran und verhindert die Entwicklung von Mikroorganismen und eines Biofilms auf der Membran. Wegen dieses Prozesses werden bei der Membranreinigung keine chemischen Mittel benötigt.

## Patentansprüche

1. Vorrichtung zur Filtration von Wasser mit einer Filteranordnung mit chemikalienfreier Selbstreinigungsfunktion zur Filterreinigung und mit einer Ozonisierungseinrichtung, mit einer Zuleitung (1) für kontaminiertes Wasser an die eine Pumpe (7) angeschlossen ist, wobei an die Zuleitung (1) die Ozonzuleitung (6) einer Ozonquelle, nämlich eines Ozonerzeugers (5), zwecks Zuführung von Ozon zum kontaminierten Wasser angeschlossen ist, wobei die Pumpe (7) ozonisiertes Wasser einem Membranfiltermodul (8), nämlich einem Querstrom- Ultrafiltrationsmodul, zuleitet, **dadurch gekennzeichnet, dass** ein Teil des Wassers durch die Membran gefiltert wird und ein anderer Teil des Wassers hingegen über ein Druckregelgerät, insbesondere ein Ventil, ungefiltert wieder aus dem Membranfiltermodul geleitet wird und gereinigtes, durch die Membran gefiltertes Wasser einerseits in einem Auslass (9) und anderseits in einem Behälter (10) für reines Trinkwasser mündet, wobei der Behälter (10) über Leitungen und eine Rückreinigungspumpe (11) zum Gegenspülen der Filtermembranen im Membranfiltermodul (8) an das Membranfiltermodul angeschlossen ist und wobei das Ausspülen von im Membranfiltermodul (8) zurückgehaltenen Verunreinigungen über ein einem Abwasseraustritt (15) zugeordnetes Druckregelgerät (14), insbesondere ein Ventil, erfolgt, wobei die Rückreinigungspumpe (11) zum Gegenspülen der Filtermembranen im Membranfiltermodul (8) über ein weiteres Membranfiltermodul (12), einen Ultrafilter, an das Membranfiltermodul (8) zur Rückreinigung des Membranfiltermoduls(8) angeschlossen ist.

2. Vorrichtung nach Anspruch 1, **dadurch gekennzeichnet, dass** die Zuleitung (1) einem Festpartikel zurückhaltenden Vorfilter (2) nachgeordnet ist.

3. Vorrichtung nach Anspruch 1 oder 2, **dadurch gekennzeichnet, dass** der Ozonerzeuger (5) eine Lufteintrittsöffnung (4) mit zugeordnetem Luftfilter (3) umfasst und über die Ozonzuleitung (6) im Ozonerzeuger (5) generiertes Ozon in die Zuleitung (1) leitet.

4. Verfahren zur Filtration von Wasser mit einer Filteranordnung mit chemikalienfreier Selbstreinigungsfunktion zur Filterreinigung und zur Ozonisierung des Wassers mit einer Vorrichtung nach einem der Ansprüche 1 bis 4, **dadurch gekennzeichnet, dass** dem kontaminierten, ggf. vorgereinigten, Wasser zunächst Ozon zugesetzt wird, wonach das Wasser- Ozongemisch durch ein Membranfiltermodul, insbesondere einem Querstrom- Ultrafiltrationsmodul, gefördert wird, wobei ein Teil des Wassers durch die Membran gefiltert wird und ein anderer Teil des Wassers hingegen über ein Druckregelgerät, insbesondere ein Ventil, ungefiltert wieder aus dem Membraniltermodul geleitet wird und wobei das durch die Membran gefilterte Wasser in zwei Teile aufgeteilt wird, ein Teil des Wassers ist zur Verwendung bereit und der andere Teil in einem Behälter zur Rückreinigung des Filtermoduls gespeichert, wobei das gereinigte Wasser zur Rückreinigung des Membraniltermoduls durch das Filtermodul zurückgefördert wird, das zurückgeförderte Wasser parallel zur Filteroberfläche aus dem Filtermodul unter Abreinigung der Filteroberfläche über ein Druckregelgerät ausfließt.

5. Verfahren nach Anspruch 6, **dadurch gekennzeichnet, dass** das zurückgeförderte Wasser zusammen mit kontaminierten, ggf. vorgereinigten, Wasser, parallel zur Filteroberfläche aus dem Membraniltermodul unter Abreinigung der Filteroberfläche über ein Druckregelgerät ausfließt.

## Claims

1. Device for filtering water, having a filter arrangement with a chemical-free self-cleaning function for filter cleaning and having an ozonisation device, having an inlet line (1) for contaminated water, to which a pump (7) is connected, wherein the ozone inlet line (6) of an ozone source, specifically an ozone generator (5), is connected to the inlet line (1) in order to supply ozone to the contaminated water, wherein the pump (7) supplies ozonised water to a membrane filter module (8), specifically a cross-flow ultrafiltration module, **characterised in that** a portion of the water is filtered by the membrane and, in contrast, another portion of the water is passed via a pressure-regulating device, in particular a valve, in an unfiltered state out of the membrane filter module, and cleaned water, filtered by the membrane, issues, on the one hand, in an outlet (9) and, on the other hand, in a container (10) for pure drinking water, wherein the container (10) is connected to the membrane filter module via lines and a reverse cleaning pump (11) for counter-flushing the filter membranes in the membrane filter module (8) and wherein the flushing-out of impurities retained in the membrane filter module (8) takes place via a pressure-regulating device (14), in particular a valve, allocated to a waste water outlet (15), wherein, for reverse cleaning of the membrane filter module (8), the reverse cleaning pump (11) for counter-flushing the filter membranes in the membrane filter module (8) is connected to the membrane filter module (8) via a further membrane filter module (12), an ultrafilter.

2. Device as claimed in claim 1, **characterised in that** the inlet line (1) is disposed downstream of a solid particle-retaining pre-filter (2).

3. Device as claimed in claim 1 or 2, **characterised in that** the ozone generator (5) comprises an air-inlet opening (4) with an allocated air filter (3) and passes ozone generated in the ozone generator (5) into the inlet line (1) via the ozone inlet line (6).

4. Method for filtering water using a filter arrangement with a chemical-free self-cleaning function for filter cleaning and for ozonisation of the water using a device as claimed in any one of claims 1 to 4 [sic], **characterised in that** ozone is first added to the contaminated, possibly pre-cleaned, water, whereupon the water-ozone mixture is delivered by a membrane filter module, specifically a cross-flow ultrafiltration module, wherein a portion of the water is filtered by the membrane and, in contrast, another portion of the water is passed via a pressure-regulating device, in particular a valve, in an unfiltered state out of the membrane filter module, and wherein the water filtered by the membrane is divided into two portions, one portion of the water is ready for use and the other portion is stored in a container for reverse cleaning of the filter module, wherein the cleaned water is delivered back through the filter module in order to reverse clean the membrane filter module, the water which has been delivered back flows in parallel with the filter surface out of the filter module, via a pressure-regulating device, thus cleaning the filter surface.

5. Method as claimed in claim 6 *[sic],* **characterised in that** the water which has been delivered back flows, together with contaminated, possibly pre-cleaned, water, in parallel with the filter surface, out of the membrane filter module, via a pressure-regulating device, thus cleaning the filter surface.

## Revendications

1. °/ Dispositif de filtration d'eau comprenant un agencement de filtre présentant une fonction d'auto-nettoyage sans produits chimiques pour nettoyer le filtre et comprenant un dispositif d'ozonisation, comprenant une conduite d'alimentation d'eau contaminée (1) à laquelle une pompe (7) est raccordée, la conduite d'alimentation en ozone (6) d'une source d'ozone, en particulier un générateur d'ozone (5), étant raccordée à la conduite d'alimentation (1) dans le but d'alimenter l'eau contaminée en ozone, la pompe (7) amenant l'eau ozonisée à un module de filtration à membrane (8), en particulier un module d'ultrafiltration à courant transversal, **caractérisé en ce qu'**une partie de l'eau est filtrée à travers la membrane et **en ce qu'**une autre partie de l'eau est en revanche ramenée à l'extérieur du module de filtration à membrane sans avoir été filtrée, par l'intermédiaire d'un appareil de régulation de la pression, en particulier une vanne, et **en ce que** l'eau épurée filtrée à travers la membrane est ramenée vers le module de filtration à membrane, l'eau filtrée par la membrane débouchant d'une part dans une sortie (9) et d'autre part dans un réservoir d'eau potable pure (10), le réservoir (10) étant raccordé au module de filtration à membrane par l'intermédiaire de conduites et d'une pompe de lavage à contre-courant (11) dans le but de réaliser un lavage à contre-courant de la membrane filtrante dans le module de filtration à membrane (8), le rinçage des impuretés retenues dans le module de filtration à membrane (8) étant réalisé à l'aide d'un dispositif de régulation de pression (14), en particulier une vanne, associé à une sortie d'eaux usées (15), la pompe de lavage à contre-courant (11) étant raccordée au module de filtration à membrane (8) par l'intermédiaire d'un autre module de filtration à membrane (12), à savoir un ultrafiltre, dans le but de réaliser un lavage à contre-courant du module de filtration à membrane (8)

2. °/ Dispositif selon la revendication 1, **caractérisé en ce que** la conduite d'alimentation (1) est agencée en aval d'un préfiltre (2) qui retient les particules solides.

3. °/ Dispositif selon la revendication 1 ou 2, **caractérisé en ce que** le générateur d'ozone (5) comporte une ouverture d'entrée d'air (4) pourvue d'un filtre à air associé (3) et envoie de l'ozone généré dans le générateur d'ozone (5) à l'intérieur de la conduite d'alimentation (1) par l'intermédiaire de la conduite d'alimentation en ozone (6).

4. °/ Procédé de filtration d'eau à l'aide d'un dispositif de filtration présentant une fonction d'auto-nettoyage sans produits chimiques pour le nettoyage du filtre et pour l'ozonisation de l'eau en utilisant un dispositif selon l'une quelconque des revendications 1 à 4, **caractérisé en ce que** l'on ajoute en premier lieu de l'ozone à de l'eau contaminée, éventuellement préalablement épurée, le mélange d'eau et d'ozone étant ensuite transporté à travers un module de filtration à membrane, en particulier un module d'ultrafiltration à courant transversal, dans lequel une partie de l'eau est filtrée à travers la membrane et une autre partie de l'eau est en revanche ramenée à l'extérieur du module de filtration à membrane sans avoir été filtrée par l'intermédiaire d'un appareil de régulation de pression, en particulier une vanne, dans lequel l'eau filtrée à travers la membrane est divisée en deux parties, une première partie de l'eau étant prête à l'emploi alors que l'autre partie de l'eau est stockée à l'intérieur d'un réservoir dans le but de réaliser un nouveau nettoyage du module de filtration, et dans lequel l'eau épurée est renvoyée à travers le module de filtration dans le but de réaliser un nouveau nettoyage du module de filtration à membrane, l'eau ainsi renvoyée s'écoulant à l'extérieur du module de filtration parallèlement à la surface du filtre par l'intermédiaire d'un appareil de régulation de pression tout en nettoyant la surface du filtre

5. °/ Procédé selon la revendication 4, **caractérisé en ce que** l'eau recyclée s'écoule à l'extérieur du module de filtration à membrane parallèlement à la surface du filtre de concert avec l'eau contaminée, éventuellement préalablement épurée, dans lequel la surface du filtre est nettoyée à l'aide d'un appareil de régulation de pression.
